# EUROPEAN PATENT APPLICATION

(11) **EP 4 852 597 A1**
(43) Date of publication of application: **09.12.2026**
(21) Application number: 24922142.5
(22) Date of filing: 13.11.2024
(51) Int. Cl.: H04W 74/0833, H04L 27/26, H04W 28/06, H04W 72/0446, H04W 72/0453

(54) **BASE STATION, TERMINAL, AND COMMUNICATION METHOD**

(30) Priority: 31.01.2024 JP 2024013289
(71) Applicant: Panasonic Intellectual Property Corporation of America, Torrance, CA 90504 (US)
(72) Inventor: NUNOME, Tomoya, kadoma-shi, Osaka 571-0057 (JP); SUZUKI, Hidetoshi, kadoma-shi, Osaka 571-0057 (JP); MAKI, Shotaro, kadoma-shi, Osaka 571-0057 (JP); INOUE, Tomohiro, kadoma-shi, Osaka 571-0057 (JP)
(74) Representative: Grünecker Patent- und Rechtsanwälte PartG mbB
(86) International application number: PCT/JP2024/040283
(87) International publication number: WO 2025/164032

(57) **Abstract**

This base station includes: a control circuit that determines a first setting of a random access channel resource in a first time resource in which a frequency band is divided into a plurality of bands by alternatively reading information on a second setting of a random access channel resource in a second time resource different from the first time resource; and a reception circuit that receives a random access channel signal on the basis of the first setting.

## Description

### Technical Field

The present disclosure relates to a base station, a terminal, and a communication method.

### Background Art

In 3rd Generation Partnership Project (3GPP), the specification of the physical layer in Release 18 New Radio access technology (NR) has been completed as a functional extension of 5th Generation mobile communication systems (5G). NR supports functions for realizing Ultra Reliable and Low Latency Communication (URLLC) in addition to enhanced Mobile Broadband (eMBB) to satisfy requirements of high speed and high capacity (see, e.g., Non-Patent Literatures (hereinafter referred to as "NPLs") 1 to 6).

### Citation List

### Non-Patent Document

NPL 1
   3GPP TS 38.211 V18.1.0, "NR; Physical channels and modulation (Release 18)," December 2023
NPL 2
   3GPP TS 38.212 V18.1.0, "NR; Multiplexing and channel coding (Release 18)," December 2023
NPL 3
   3GPP TS 38.213 V18.1.0, "NR; Physical layer procedure for control (Release 18)," December 2023
NPL 4
   3GPP TS 38.214 V18.1.0, "NR; Physical layer procedures for data (Release 18)," December 2023
NPL 5
   3GPP TS 38.215 V18.1.0, "NR; Physical layer measurements (Release 18)," December 2023
NPL 6
   3GPP TS 38.331 V18.0.0, "NR; Radio Resource Control (RRC) protocol specification (Release 18)," December 2023

### Summary of Invention

However, there is room for consideration regarding a method for configuring a resource for a random access channel.

A non-limiting embodiment of the present disclosure facilitates providing a base station, a terminal, and a communication method each capable of improving the efficiency of resource configuration of a random access channel.

A base station according to an embodiment of the present disclosure includes: control circuitry, which, in operation, determines a first configuration of a resource of a random access channel in a first time resource having a frequency band divided into a plurality of bands, by reinterpreting information related to a second configuration of the resource of the random access channel in a second time resource different from the first time resource; and reception circuitry, which, in operation, receives a signal of the random access channel based on the first configuration.

It should be noted that general or specific embodiments may be implemented as a system, an apparatus, a method, an integrated circuit, a computer program, a storage medium, or any selective combination thereof.

According to an embodiment of the present disclosure, resource configuration of a random access channel can be appropriately performed.

Additional benefits and advantages of the disclosed embodiment will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[FIG. 1] FIG. 1 illustrates examples of a Duplex system.
[FIG. 2] FIG. 2 is a diagram illustrating an example of Dynamic Subband non-overlapping full duplex (SBFD).
[FIG. 3] FIG. 3 is a diagram illustrating an example of allocation of Physical Random Access Channel (PRACH) resources in SBFD.
[FIG. 4] FIG. 4 is a block diagram illustrating a configuration example of a part of a base station.
[FIG. 5] FIG. 5 is a block diagram illustrating a configuration example of a part of a terminal.
[FIG. 6] FIG. 6 is a block diagram illustrating a configuration example of the base station.
[FIG. 7] FIG. 7 is a block diagram illustrating a configuration example of the terminal.
[FIG. 8] FIG. 8 is a sequence diagram illustrating exemplary operations of the base station and the terminal.
[FIG. 9] FIG. 9 is a diagram illustrating an example of PRACH resource configuration.
[FIG. 10] FIG. 10 is a diagram illustrating an example of a configuration.
[FIG. 11] FIG. 11 is a diagram of an exemplary architecture of a 3GPP NR system.
[FIG. 12] FIG. 12 is a diagram of an exemplary functional split in 5G O-RAN.

### Description of Embodiments

Hereinafter, embodiments of the present disclosure will be described in detail with reference to the accompanying drawings.

### [Regarding Subband Non-Overlapping Full Duplex (SBFD)]

As a Study Item of Release 18, "Study on evolution of NR duplex operation" has been discussed. One of the main topics of the Study Item includes support for subband non-overlapping full duplex (SBFD, also referred to as Cross Division Duplex (XDD)).

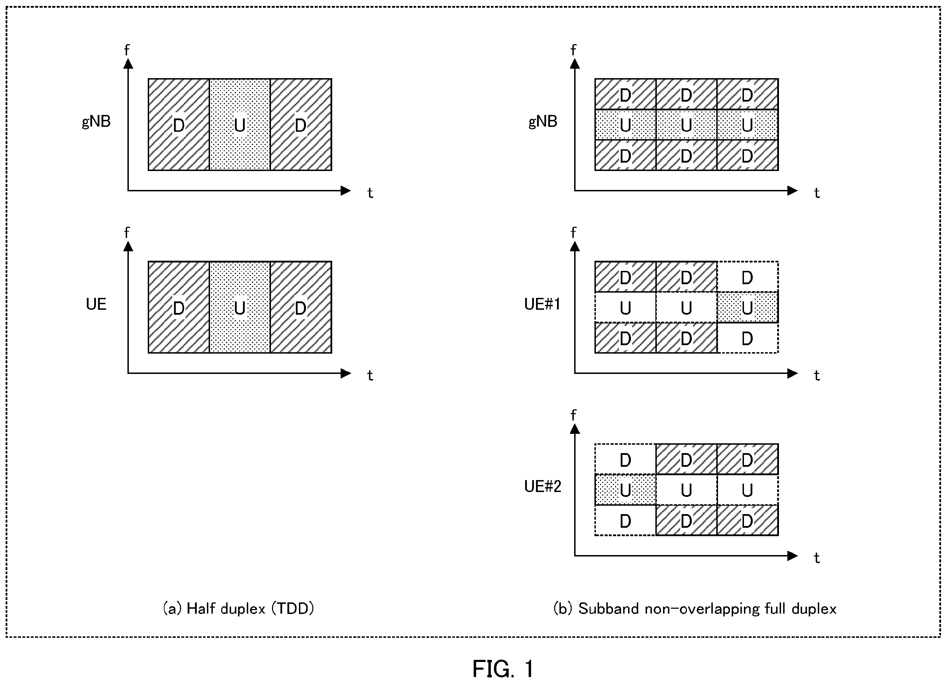

FIG. 1 illustrates examples of a Duplex system. In FIG. 1, a vertical axis represents frequency, and a horizontal axis represents time. Further, "U" indicates uplink transmission and "D" indicates downlink transmission in FIG. 1.

In FIG. 1, part (a) illustrates an example of Time Division Duplex (TDD) in a half duplex mode. In part (a) of FIG. 1, a terminal (e.g., also referred to as user equipment (UE)) is a terminal connected to a base station (e.g., also referred to as gNB). In the half duplex illustrated in part (a) of FIG. 1, the transmission direction (e.g., downlink or uplink) in a certain time resource may be common between the base station and the terminal. For example, the transmission direction is not different between terminals in a certain time resource.

In FIG. 1, part (b) illustrates an example of SBFD. In SBFD, a frequency resource (or frequency band) is divided into multiple bands (also referred to, for example, as subbands, RB sets, sub-bands, sub-BandWidth Parts (sub-BWPs)), and transmission in different directions (e.g., downlink or uplink) in units of subbands is supported. Note that, in SBFD, a terminal performs either uplink transmission or downlink reception in a certain time resource, and does not perform transmission and reception in the other direction. In contrast, in SBFD, the base station can simultaneously transmit and receive both the uplink and the downlink. Note that there may be a case where a terminal does not use a resource in the transmission direction in a certain time resource (e.g., a resource indicated by a broken line in part (b) of FIG. 1).

Although omitted in FIG. 1, a guard band may be arranged between an uplink subband (UL subband: U) and a downlink subband (DL subband: D). The guard band may be used to reduce interference between different transmission directions (links) (cross link interference (CLI)).

In the following description, a symbol in which an operation or control of SBFD is performed is referred to as an "SBFD symbol." Further, a symbol in which an operation or control of SBFD is not performed (e.g., a symbol different from the SBFD symbol) may be referred to as a "non-SBFD symbol." Further, for example, a slot composed of SBFD symbols may be referred to as an "SBFD slot," and a slot composed of a non-SBFD symbol may be referred to as a "non-SBFD slot."

Further, a subband configuration is denoted as {X ... X}. X represents a UL subband (U) or a DL subband (D). The order of notation corresponds to the order of arrangement of the subbands. For example, the subband configuration at part (b) in FIG. 1 is denoted as {DUD}.

### [Regarding SBFD symbols and SBFD-aware terminal]

An SBFD symbol may be configured using (e.g., by changing) a legacy symbol (existing symbol) such as a DL symbol, a UL symbol, or a Flexible symbol. For example, an SBFD symbol may be configured using a DL symbol. A legacy symbol is configured by, for example, RRC signaling (e.g., TDD-UL-DL-ConfigCommon). Here, the non-SBFD symbol is, for example, a symbol that is not an SBFD symbol (e.g., a legacy symbol and not used as an SBFD symbol).

An SBFD-aware terminal (e.g., SBFD-aware UE) is a terminal that supports operation and control of SBFD. The SBFD-aware terminal is capable of acquiring configurations related to SBFD, such as positions of subbands in the frequency domain and the time domain. A non-SBFD-aware terminal is a terminal that does not support operation and control of SBFD. The non-SBFD-aware terminal (e.g., non-SBFD-aware UE) does not recognize an SBFD symbol, for example, and thus even when a legacy symbol is configured (or changed) to an SBFD symbol, operates while recognizing the symbol as a legacy symbol.

### [Regarding Random Access Channel (RACH) transmission on SBFD symbol]

In a case of supporting RACH transmission on an SBFD symbol, Physical Random Access Channel (PRACH) resources (e.g., also referred to as RACH occasions (ROs)) in the time domain can be increased as compared with an existing method. By an increase in ROs, reduction of delay in RACH transmission, reduction of collision between terminals, and improvement of coverage by Long preamble format or PRACH repetition (e.g., repetition transmission) can be achieved. Meanwhile, PRACH transmission on a UL subband may cause inter-UE interference with respect to DL reception on a DL subband (e.g., UL-to-UE CLI), potentially resulting in degradation of DL performance.

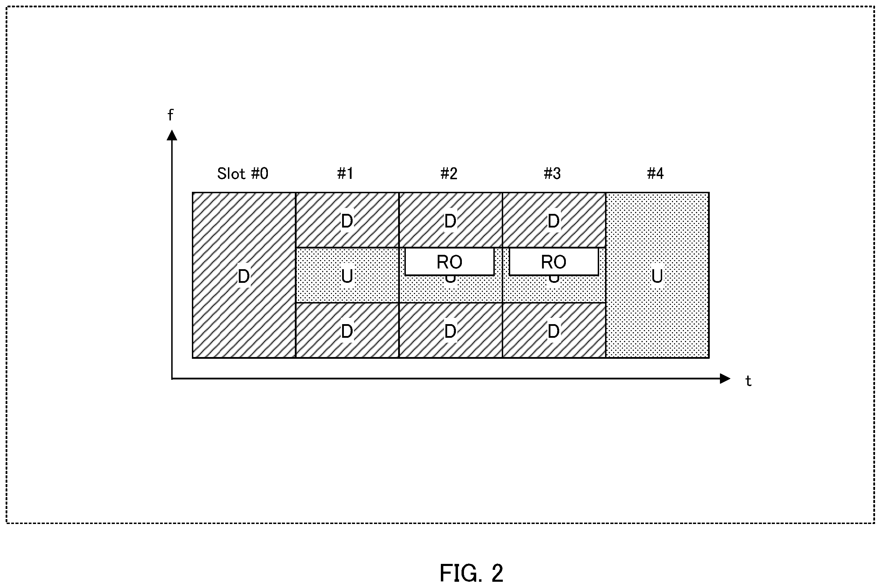

FIG. 2 illustrates an arrangement example of RACH resources on SBFD symbols. In the example of FIG. 2, slot #0 is a slot composed of DL symbols (e.g., referred to as "DL slot"), slots #1, #2, and #3 are slots composed of SBFD symbols (e.g., referred to as "SBFD slot"), and slot #4 is a slot composed of UL symbols (e.g., referred to as "UL slot"). Further, in the example of FIG. 2, the subband configuration in the SBFD slot is {DUD}. In the example of FIG. 2, PRACH resources (RO) are arranged in UL subbands of slot #2 and slot #3. In this manner, by supporting RACH transmission on SBFD symbols, PRACH resources in the time domain can be increased as compared with an existing method.

### [Regarding Configuration of PRACH Resources]

PRACH resources in the time domain may be configured by, for example, information (e.g., information in a table format) regarding association between configuration values (candidate values) of one or more parameters related to the configuration of PRACH and identification information (e.g., index) indicating any one of the configuration values. For example, the PRACH resources in the time domain may be configured by a "Random access configurations table." The Random access configurations table for TDD is defined in, for example, Table 6.3.3.2-3 and Table 6.3.3.2-4 of TS 38.211 (NPL 1). Note that the information related to the configuration of PRACH resources is not limited to Table 6.3.3.2-3 and Table 6.3.3.2-4 of TS 38.211 (NPL 1), and may be information indicating other combinations of candidate values.

Table 1 and Table 2 show excerpts of the indices of Preamble format C2 from Table 6.3.3.2-3 and Table 6.3.3.2-4 of TS 38.211 (NPL 1).

**[Table 1]**

| Table 1 Excerpts from Random access configurations table (TS 38.211 Table 6.3.3.2-3) | | | | | | | | |
|---|---|---|---|---|---|---|---|---|
| **PRACH Configuration Index** | **Preamble format** | ***n*_{f} mod *x* = *y*** | | **Subframe number** | **Starting symbol** | **Number of PRACH slots within a subframe** | ${N}_{t}^{RA , slot}$, **number of time-domain PRACH occasions within a PRACH slot** | ${N}_{dur}^{RA}$, **PRACH duration** |
| | | *x* | *y* | | | | | |
| 189 | C2 | 16 | 1 | 9 | 2 | 2 | 2 | 6 |
| 190 | C2 | 8 | 1 | 9 | 2 | 2 | 2 | 6 |
| 191 | C2 | 4 | 1 | 9 | 2 | 1 | 2 | 6 |
| 192 | C2 | 2 | 1 | 9 | 2 | 1 | 2 | 6 |
| 193 | C2 | 2 | 1 | 8,9 | 2 | 2 | 2 | 6 |
| 194 | C2 | 2 | 1 | 7,9 | 2 | 1 | 2 | 6 |
| 195 | C2 | 2 | 1 | 7,9 | 8 | 1 | 1 | 6 |
| 196 | C2 | 2 | 1 | 4,9 | 8 | 1 | 1 | 6 |
| 197 | C2 | 2 | 1 | 4,9 | 2 | 2 | 2 | 6 |
| 198 | C2 | 2 | 1 | 2,3,4,7,8,9 | 2 | 1 | 2 | 6 |
| 199 | C2 | 8 | 1 | 9 | 8 | 2 | 1 | 6 |
| 200 | C2 | 4 | 1 | 9 | 8 | 1 | 1 | 6 |
| 201 | C2 | 1 | 0 | 9 | 2 | 2 | 2 | 6 |
| 202 | C2 | 1 | 0 | 9 | 8 | 1 | 1 | 6 |
| 203 | C2 | 1 | 0 | 9 | 2 | 1 | 2 | 6 |
| 204 | C2 | 1 | 0 | 8,9 | 2 | 2 | 2 | 6 |
| 205 | C2 | 1 | 0 | 4,9 | 2 | 1 | 2 | 6 |
| 206 | C2 | 1 | 0 | 7,9 | 8 | 1 | 1 | 6 |
| 207 | C2 | 1 | 0 | 3,4,8,9 | 2 | 1 | 2 | 6 |
| 208 | C2 | 1 | 0 | 3,4,8,9 | 2 | 2 | 2 | 6 |
| 209 | C2 | 1 | 0 | 1,3,5,7,9 | 2 | 1 | 2 | 6 |
| 210 | C2 | 1 | 0 | 0,1,2,3,4,5,6,7,8,9 | 8 | 1 | 1 | 6 |

**[Table 2]**

| Table 2 Excerpts from Random access configurations table (TS 38.211 Table 6.3.3.2-4) | | | | | | | | |
|---|---|---|---|---|---|---|---|---|
| **PRACH Configuration Index** | **Preamble format** | ***n*_{f} mod *x* = *y*** | | **Slot number** | **Starting symbol** | **Number of PRACH slots within a 60 kHz slot** | ${N}_{t}^{RA , slot}$, **number of time-domain PRACH occasions within a PRACH slot** | ${N}_{dur}^{RA}$, **PRACH duration** |
| | | *x* | *y* | | | | | |
| 173 | C2 | 16 | 1 | 4,9,14,19,24,29,34,39 | 0 | 2 | 2 | 6 |
| 174 | C2 | 16 | 1 | 3,7,11,15,19,23,27,31,35,39 | 0 | 1 | 2 | 6 |
| 175 | C2 | 8 | 1 | 4,9,14,19,24,29,34,39 | 0 | 2 | 2 | 6 |
| 176 | C2 | 8 | 1 | 3,7,11,15,19,23,27,31,35,39 | 0 | 1 | 2 | 6 |
| 177 | C2 | 8 | 1,2 | 9,19,29,39 | 0 | 2 | 2 | 6 |
| 178 | C2 | 4 | 1 | 4,9,14,19,24,29,34,39 | 0 | 1 | 2 | 6 |
| 179 | C2 | 4 | 1 | 4,9,14,19,24,29,34,39 | 0 | 2 | 2 | 6 |
| 180 | C2 | 4 | 1 | 3,7,11,15,19,23,27,31,35,39 | 0 | 1 | 2 | 6 |
| 181 | C2 | 2 | 1 | 7,15,23,31,39 | 2 | 2 | 2 | 6 |
| 182 | C2 | 2 | 1 | 4,9,14,19,24,29,34,39 | 0 | 1 | 2 | 6 |
| 183 | C2 | 2 | 1 | 4,9,14,19,24,29,34,39 | 0 | 2 | 2 | 6 |
| 184 | C2 | 2 | 1 | 3,7,11,15,19,23,27,31,35,39 | 0 | 1 | 2 | 6 |
| 185 | C2 | 1 | 0 | 19,39 | 2 | 1 | 2 | 6 |
| 186 | C2 | 1 | 0 | 3,5,7 | 0 | 1 | 2 | 6 |
| 187 | C2 | 1 | 0 | 24,29,34,39 | 7 | 1 | 1 | 6 |
| 188 | C2 | 1 | 0 | 9,19,29,39 | 7 | 2 | 1 | 6 |
| 189 | C2 | 1 | 0 | 17,19,37,39 | 0 | 1 | 2 | 6 |
| 190 | C2 | 1 | 0 | 9,19,29,39 | 2 | 2 | 2 | 6 |
| 191 | C2 | 1 | 0 | 7,15,23,31,39 | 2 | 1 | 2 | 6 |
| 192 | C2 | 1 | 0 | 3,5,7,9,11,13 | 7 | 1 | 1 | 6 |
| 193 | C2 | 1 | 0 | 23,27,31,35,39 | 7 | 2 | 1 | 6 |
| 194 | C2 | 1 | 0 | 23,27,31,35,39 | 0 | 1 | 2 | 6 |
| 195 | C2 | 1 | 0 | 4,9,14,19,24,29,34,39 | 7 | 2 | 1 | 6 |
| 196 | C2 | 1 | 0 | 4,9,14,19,24,29,34,39 | 2 | 1 | 2 | 6 |
| 197 | C2 | 1 | 0 | 13,14,15, 29,30,31,37,38,39 | 7 | 2 | 1 | 6 |
| 198 | C2 | 1 | 0 | 3,7,11,15,19,23,27,31,35,39 | 7 | 1 | 1 | 6 |
| 199 | C2 | 1 | 0 | 3,7,11,15,19,23,27,31,35,39 | 0 | 1 | 2 | 6 |
| 200 | C2 | 1 | 0 | 1,3,5,7,...,37,39 | 0 | 1 | 2 | 6 |
| 201 | C2 | 1 | 0 | 0,1,2,...,39 | 7 | 1 | 1 | 6 |

The parameter "Subframe number" in Table 1 indicates a subframe number within one frame, and the parameter "Slot number" in Table 2 indicates a slot number within one frame (e.g., within 40 slots) in 60 kHz subcarrier spacing (SCS). When a PRACH configuration index shown in Table 1 or Table 2 (index of each table in Table 1 or Table 2) is indicated from a base station to a terminal, the terminal can determine the position of a PRACH resource available in the time domain.

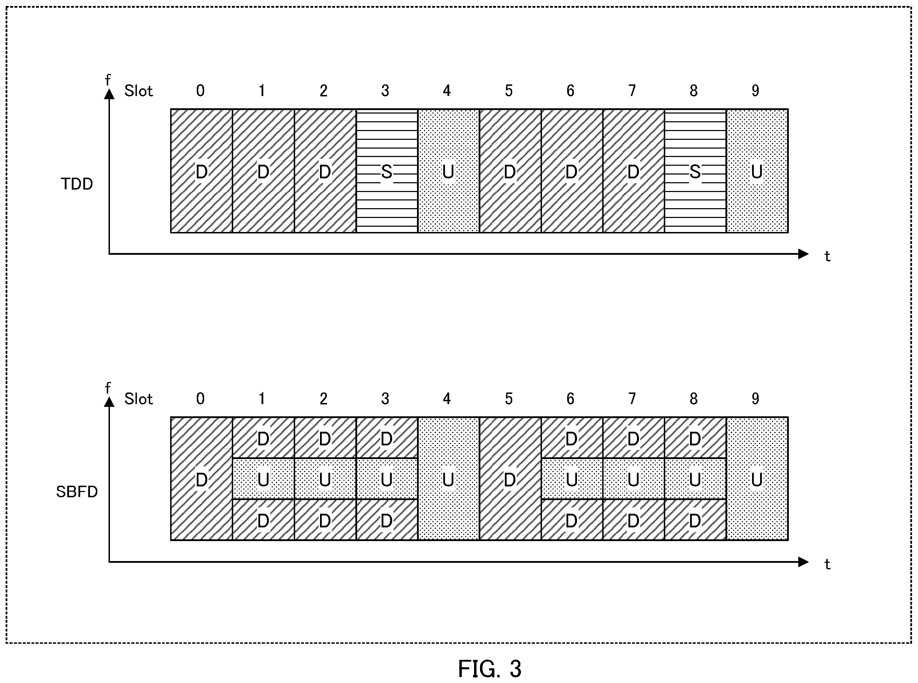

An existing Random access configurations table such as Table 1 and Table 2 is defined in consideration of, for example, the position of a UL slot. For example, "Subframe number" in Table 1 indicates the subframe number of the subframe in which a PRACH resource is arranged. In all indices of Table 1, the Subframe number "9" (hereinafter, also referred to as "subframe 9") is included. This is because, in many cases, a slot corresponding to subframe 9 is configured as a UL slot. FIG. 3 illustrates an example of a comparison between slot configurations of TDD and SBFD. In the example of FIG. 3, as one example of a typical slot configuration of TDD, a slot configuration including repetition of "DDDSU" in the time domain is illustrated. Here, "D" indicates a DL slot, "U" indicates a UL slot, and "S" indicates a Special slot (e.g., slot for switching from DL to UL). Further, in the example of FIG. 3, as one example of a slot configuration of SBFD, a slot configuration including repetition of "DXXXU" in the time domain is illustrated. The example (pattern) of the slot configuration in SBFD illustrated in FIG. 3 is, for example, a slot configuration discussed as a typical slot configuration in SBFD. Here, "X" indicates an SBFD slot.

For example, assuming 15 kHz SCS, both a subframe and a slot have a period (interval) of 1 ms. Therefore, in both the TDD slot configuration and the SBFD slot configuration illustrated in FIG. 3, subframe 9 corresponds to a UL slot. Accordingly, for example, when an SBFD symbol is configured using a DL symbol, in the slot configuration illustrated in FIG. 3, subframe 9 (corresponding to the UL slot) cannot be used for arrangement of PRACH resources on the SBFD symbol. Therefore, the existing Random access configurations table may not be suitable for configuration of PRACH resources on an SBFD symbol.

In a non-limiting embodiment of the present disclosure, a method for improving the efficiency of PRACH resource configuration will be described. For example, in a non-limiting embodiment of the present disclosure, a method for flexibly configuring a PRACH resource on an SBFD symbol using an existing Random access configurations table will be described.

### [Overview of Communication System]

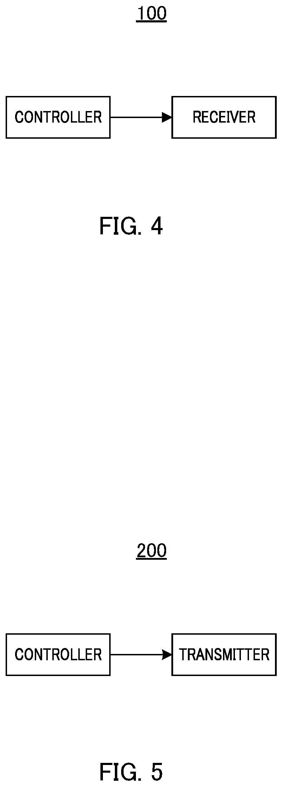

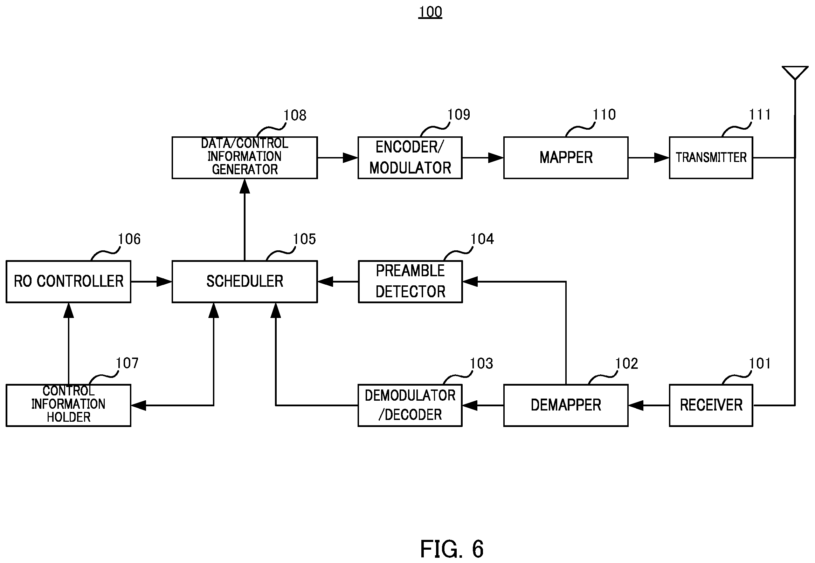

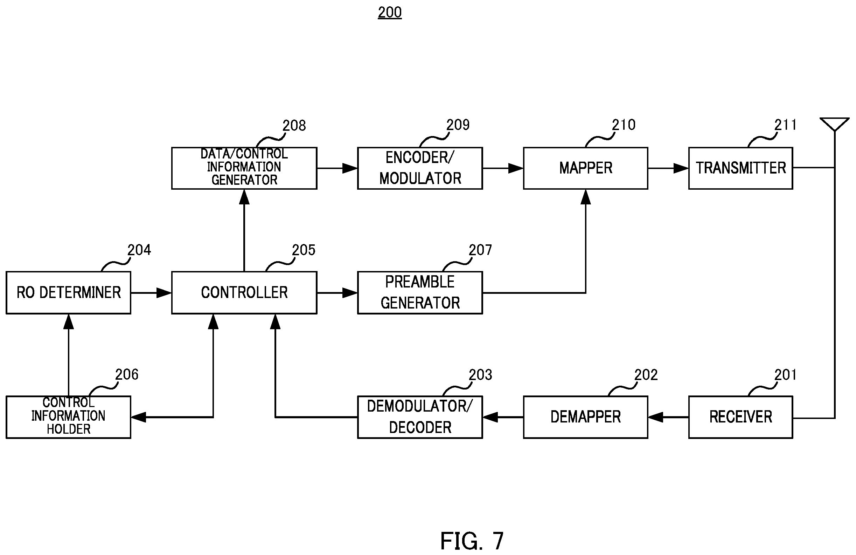

A communication system according to an embodiment of the present disclosure may include, for example, base station 100 (e.g., gNB) illustrated in FIGS. 4 and 6, and terminal 200 (e.g., UE) illustrated in FIGS. 5 and 7. Base station 100 and terminal 200 may each be present in a plurality in the communication system.

FIG. 4 is a block diagram illustrating a configuration example of a part of base station 100 according to an embodiment of the present disclosure. In base station 100 illustrated in FIG. 4, a controller (e.g., corresponding to control circuitry) determines a first configuration of a resource (PRACH resource) of a random access channel in a first time resource (e.g., slot composed of SBFD symbols) in which a frequency band is divided into a plurality of bands, by reinterpreting information related to a second configuration of a resource of the random access channel in a second time resource different from the first time resource (e.g., slot composed of non-SBFD symbols). A receiver (e.g., corresponding to reception circuitry) receives a signal of the random access channel based on the first configuration.

FIG. 5 is a block diagram illustrating a configuration example of a part of terminal 200 according to an embodiment of the present disclosure. In terminal 200 illustrated in FIG. 5, a controller (e.g., corresponding to control circuitry) determines a first configuration of a resource (PRACH resource) of a random access channel in a first time resource (e.g., slot composed of SBFD symbols) in which a frequency band is divided into a plurality of bands, by reinterpreting information related to a second configuration of a resource of the random access channel in a second time resource different from the first time resource (e.g., slot composed of non-SBFD symbols). A transmitter (e.g., corresponding to transmission circuitry) transmits a signal of the random access channel based on the first configuration.

### [Configuration of Base Station]

FIG. 6 is a block diagram illustrating a configuration example of base station 100 according to an embodiment of the present disclosure. In FIG. 6, base station 100 includes receiver 101, demapper 102, demodulator/decoder 103, preamble detector 104, scheduler 105, RO controller 106, control information holder 107, data/control information generator 108, encoder/modulator 109, mapper 110, and transmitter 111.

Note that, for example, at least one of demapper 102, demodulator/decoder 103, scheduler 105, RO controller 106, control information holder 107, data/control information generator 108, encoder/modulator 109, and mapper 110 may be included in the controller illustrated in FIG. 4, and receiver 101 may be included in the receiver illustrated in FIG. 4.

Receiver 101 performs, for example, reception processing such as down-conversion or A/D conversion on a received signal received through an antenna, and outputs the received signal after the reception processing to demapper 102.

Demapper 102 performs resource demapping on the received signal (e.g., uplink signal) input from receiver 101, and outputs a modulated signal to demodulator/decoder 103 and preamble detector 104.

Demodulator/decoder 103 demodulates and decodes, for example, a modulated signal input from demapper 102, and outputs a decoding result to scheduler 105.

Preamble detector 104 performs, for example, detection of a preamble transmitted on a PRACH (e.g., PRACH signal) on the modulated signal input from demapper 102, and outputs a detection result to scheduler 105.

Scheduler 105 may perform, for example, scheduling for terminal 200. Scheduler 105 performs, for example, scheduling of transmission and reception of each terminal 200 based on at least one of the decoding result input from demodulator/decoder 103, the detection result of the preamble input from preamble detector 104, the information input from RO controller 106 (e.g., including PRACH configuration information), and the control information input from control information holder 107, and instructs data/control information generator 108 to generate at least one of data and control information. Further, scheduler 105 instructs data/control information generator 108 to transmit PRACH configuration information input from RO controller 106 to terminal 200 as signaling information. Further, scheduler 105 outputs control information related to terminal 200 to control information holder 107.

RO controller 106 determines, based on control information input from control information holder 107 (e.g., information related to SBFD), for example, PRACH configuration information (e.g., including PRACH transmission power) associated with a PRACH resource (RO) for each of an SBFD-aware terminal and a non-SBFD-aware terminal. The information related to SBFD may include, for example, at least one of information related to a slot configuration and information related to a subband configuration. RO controller 106 outputs the determined PRACH configuration information to scheduler 105.

Control information holder 107 holds, for example, control information configured for each terminal 200. The control information may include, for example, information related to SBFD. Control information holder 107 may output, for example, the held information to each component (e.g., scheduler 105 and RO controller 106) of base station 100 as necessary.

Data/control information generator 108 generates, for example, at least one of data and control information in accordance with the instruction from scheduler 105, and outputs a signal including the generated data or control information to encoder/modulator 109. The generated data may include, for example, higher layer signaling information (e.g., PRACH configuration information).

Encoder/modulator 109 encodes and modulates, for example, a signal (e.g., data, control information) input from data/control information generator 108, and outputs a modulated signal to mapper 110.

Mapper 110 performs, for example, resource mapping on the modulated signal input from encoder/modulator 109, and outputs a transmission signal to transmitter 111.

Transmitter 111 performs, for example, transmission processing such as D/A conversion, up-conversion, or amplification on the signal input from mapper 110, and transmits a radio signal obtained by the transmission processing from an antenna to terminal 200.

### [Configuration of Terminal]

FIG. 7 is a block diagram illustrating a configuration example of terminal 200 according to one aspect of the present disclosure. In FIG. 7, terminal 200 includes receiver 201, demapper 202, demodulator/decoder 203, RO determiner 204, controller 205, control information holder 206, preamble generator 207, data/control information generator 208, encoder/modulator 209, mapper 210, and transmitter 211.

For example, at least one of demapper 202, demodulator/decoder 203, RO determiner 204, controller 205, control information holder 206, preamble generator 207, data/control information generator 208, encoder/modulator 209, and mapper 210 may be included in the controller illustrated in FIG. 5, and transmitter 211 may be included in the transmitter illustrated in FIG. 5.

Receiver 201 performs reception processing such as down-conversion or A/D conversion on a received signal received through an antenna, and outputs the received signal after the reception processing to demapper 202.

Demapper 202 performs resource demapping on the received signal input from receiver 201, and outputs a modulated signal to demodulator/decoder 203.

Demodulator/decoder 203 demodulates and decodes, for example, the modulated signal input from demapper 202, and outputs a decoding result to controller 205. The decoding result may include, for example, at least one of higher layer signaling information and downlink control information.

RO determiner 204 determines a PRACH resource (RO) based on, for example, control information input from control information holder 206 (e.g., PRACH configuration information, information related to SBFD (e.g., including information related to slot configuration or information related to subband configuration)), and outputs PRACH resource information indicating the determined result to controller 205.

Controller 205 may determine whether transmission and reception of data or control information is present, or whether PRACH transmission is present, based on, for example, a decoding result (e.g., data or control information) input from demodulator/decoder 203, PRACH resource information input from RO determiner 204, and control information input from control information holder 206. When transmission of data or control information is present as a result of the determination, controller 205 may, for example, instruct data/control information generator 208 to generate at least one of data and control information. Further, when PRACH transmission is present, controller 205 may, for example, instruct preamble generator 207 to generate a preamble signal, based on the PRACH resource information. Further, controller 205 may, for example, output control information on terminal 200 to control information holder 206.

Control information holder 206 holds, for example, control information input from controller 205, and outputs the held information to each component (e.g., RO determiner 204 and controller 205) as necessary.

Preamble generator 207 generates, for example, a preamble signal to be transmitted on PRACH (e.g., PRACH signal) in accordance with an instruction from controller 205, and outputs the generated preamble signal to mapper 210.

Data/control information generator 208 generates, for example, data or control information in accordance with the instruction from controller 205, and outputs a signal including the generated data or control information to encoder/modulator 209.

Encoder/modulator 209 encodes and modulates, for example, a signal input from data/control information generator 208, and outputs a modulated signal to mapper 210.

Mapper 210 performs resource mapping on the modulated signal input from encoder/modulator 209 or the preamble signal input from preamble generator 207, and outputs a transmission signal to transmitter 211.

Transmitter 211 performs, for example, transmission processing such as D/A conversion, up-conversion, or amplification on the signal input from mapper 210, and transmits a radio signal obtained by the transmission processing from an antenna to base station 100.

### [Operations of Base Station 100 and Terminal 200]

Exemplary operations of base station 100 and terminal 200 having the above configurations will be described.

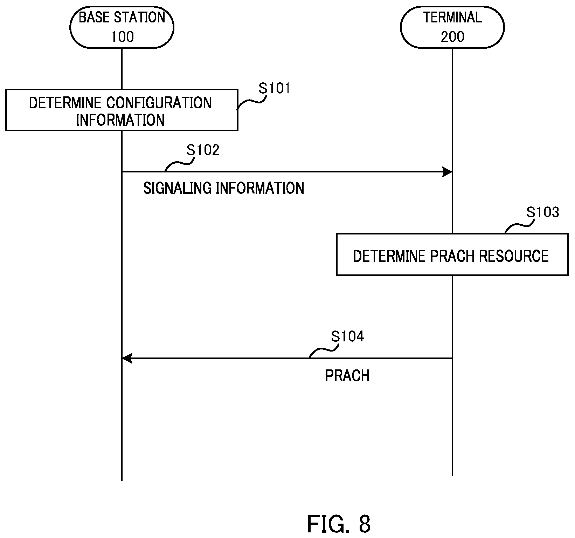

FIG. 8 is a sequence diagram illustrating exemplary operations of base station 100 and terminal 200.

In FIG. 8, base station 100 determines, for example, a configuration related to SBFD or PRACH (S101).

Base station 100 transmits, for example, higher-layer signaling information including the determined configuration information to terminal 200 (S102). Transmission of the signaling information may be, for example, broadcasting by System Information Block (SIB), or may be indicated by terminal-specific (terminal-individual) signaling information.

Terminal 200 determines, for example, available PRACH resources based on configuration information included in the signaling information transmitted from base station 100 (S103).

Terminal 200 transmits a PRACH (e.g., preamble signal) based on the determined PRACH resources, and base station 100 receives the PRACH (S104).

### [PRACH Resource Configuration Method]

A method for configuring PRACH resources in base station 100 (e.g., RO controller 106) will be described. Note that terminal 200 (e.g., RO determiner 204) may determine (or judge), for example, available PRACH resources on the assumption of the method for configuring PRACH resources performed by base station 100.

For example, when configuring PRACH resources for an SBFD-aware terminal (e.g., PRACH resource in an SBFD symbol), base station 100 reinterprets the existing Random access configurations table, or changes a method for applying parameters defined in the existing Random access configurations table.

The reinterpretation of the existing Random access configurations table may be performed in accordance with, for example, a configuration or a predefined rule.

For example, PRACH resources for SBFD-aware terminals may be configured separately from PRACH resources for non-SBFD-aware terminals (e.g., legacy terminals). By separately configuring PRACH resources for SBFD-aware terminals, it becomes possible to configure (e.g., add) PRACH resources for SBFD-aware terminals while suppressing an impact on non-SBFD-aware terminals. Further, SBFD-aware terminals may use, for example, PRACH resources for non-SBFD-aware terminals in addition to the PRACH resources for SBFD-aware terminals.

In the following, examples of a method for configuring PRACH resources will be described.

### <Method 1>

In Method 1, in determining the configuration of PRACH resources for SBFD-aware terminals, base station 100 reinterprets the existing Random access configurations table by replacing a subframe number or a slot number included in the existing Random access configurations table with another number.

For example, in a Random access configurations table used in Frequency Range 1 (FR1) (e.g., Table 6.3.3.2-3 of TS 38.211 (NPL 1)), since a subframe number is defined, base station 100 may replace the subframe number with another subframe number.

For example, in a Random access configurations table used in Frequency Range 2 (FR2) (e.g., Table 6.3.3.2-4 of TS 38.211 (NPL 1)), since a slot number is defined, base station 100 may replace the slot number with another slot number.

As described above, a subframe number or a slot number included in the existing Random access configurations table is defined on the assumption of a subframe number or a slot number in which a UL slot can be arranged. Thus, base station 100 may replace the subframe number or the slot number with another number so that a PRACH resource can be arranged in an SBFD symbol or an SBFD slot.

For example, when a subframe number defined by a certain index is "9" and an SBFD slot is not arranged at the position of subframe 9 (e.g., when subframe 9 corresponds to a UL slot), a PRACH resource corresponding to the index is not used for the SBFD slot. In contrast, in Method 1, by replacing the subframe number "9" with another number, base station 100 also enables an index corresponding to the subframe number "9" to be used for arrangement of a PRACH resource on an SBFD symbol.

Note that, for example, when a subframe number defined by a certain index includes all subframe numbers such as "0,1,2,3,4,5,6,7,8,9," base station 100 may be capable of arranging PRACH resources in an SBFD slot without replacing the subframe number. However, in a case of a configuration in which a PRACH resource is arranged only in a specific SBFD slot, the index cannot be used for arrangement of a PRACH resource on an SBFD symbol.

In the following, an example of a method for replacing a subframe number or a slot number according to Method 1 will be described.

### <Method 1-1>

In Method 1-1, base station 100 replaces one or some of a plurality of subframe numbers or a plurality of slot numbers defined in the existing Random access configurations table with another subframe number or another slot number.

As a replacement-destination subframe number or slot number, a subframe number or a slot number corresponding to a slot including an SBFD symbol may be configured.

A replacement-source subframe number or slot number, and a replacement-destination subframe number or slot number (e.g., a set of the replacement-source and replacement-destination subframe numbers or slot numbers) may be configured, respectively. The configuration of the replacement-source and replacement-destination subframe numbers or slot numbers may be predefined, or may be indicated (or configured) to terminal 200 by a configuration. The configuration may be configured, for example, in association with the symbol configuration of SBFD.

As each of the replacement-source subframe number or slot number, and the replacement-destination subframe number or slot number, for example, one or more subframe numbers or slot numbers may be specified. At that time, the number of the replacement-source subframe numbers or slot numbers and the number of the replacement-destination subframe numbers or slot numbers may be the same as or may be different from each other. For example, the replacement-source subframe number may be set to "9," and the replacement-destination subframe number may be set to "7, 8." In a slot configuration for SBFD, it is generally assumed that the number of UL slots and the number of SBFD slots within one frame are different from each other. Thus, by allowing the number of subframe numbers or slot numbers to be different between a replacement source and a replacement destination (e.g., when the number of the replacement-destination subframe numbers or slot numbers is greater than the number of the replacement-source subframe numbers or slot numbers), the configuration of PRACH resources more suitable for SBFD slots becomes possible, as compared with the configuration in the existing Random access configurations table.

Further, one or some of the replacement-destination subframe numbers or slot numbers may overlap with any of the replacement-source subframe numbers or slot numbers.

Table 3 shows an example of a replacement of a subframe number according to Method 1-1.

**[Table 3]**

| Table 3 Exa | | | | | | | | |
|---|---|---|---|---|---|---|---|---|
| **PRACH Configuration Index** | **Preamble format** | ***n*_{f} mod *x* = *y*** | | **Subframe number** | **Starting symbol** | **Number of PRACH slots within a subframe** | ${N}_{t}^{RA , slot}$ , **number of time-domain PRACH occasions within a PRACH slot** | ${N}_{dur}^{RA}$ , **PRACH duration** |
| | | *x* | *y* | | | | | |
| 192 | C2 | 2 | 1 | 9 **→ 7** | 2 | 1 | 2 | 6 |
| 193 | C2 | 2 | 1 | 8,9 → **7**,**8** | 2 | 2 | 2 | 6 |
| 194 | C2 | 2 | 1 | 7,9 → **7** | 2 | 1 | 2 | 6 |

As one example, Table 3 extracts indices 192, 193, and 194 from among a plurality of PRACH Configuration indices (hereinafter, referred to as "indices") in the Random access configurations table shown in Table 6.3.3.2-3 of TS 38.211 (NPL 1). In the example of Table 3, the replacement-source subframe number is set to "9," and the replacement-destination subframe number is set to "7." Further, in the column of "Subframe number" shown in Table 3, a subframe number defined in the existing Random access configurations table (e.g., replacement-source subframe number) is shown on the left side of an arrow, and a subframe number after the replacement is shown on the right side of the arrow.

As shown in Table 3, in index 192, the subframe number "9" is replaced with a subframe number "7," and the subframe number after the replacement is set to "7." Further, in index 193, the subframe number "9" is replaced with "7," and the subframe number after the replacement is set to "7, 8." Further, in index 194, the subframe number "9" is replaced with "7," and since "7" overlaps, the subframe number after the replacement is set to "7" (one subframe number).

In this manner, in Method 1-1, by using the existing Random access configurations table for the configuration of PRACH resources in SBFD, PRACH resources suitable for a slot configuration or a symbol configuration of SBFD can be configured without adding a new table for SBFD.

Further, by the configuration of PRACH resources suitable for a slot configuration or a symbol configuration of SBFD, flexibility of PRACH resource configuration can be improved, and more PRACH resources can be arranged on an SBFD slot or an SBFD symbol, and therefore reduction of delay in RACH transmission, reduction of collision of PRACH transmission between terminals, and coverage improvement can be achieved.

### <Method 1-2>

In Method 1-2, base station 100 replaces all of a plurality of subframe numbers or a plurality of slot numbers defined in the existing Random access configurations table with another subframe number or another slot number.

As a replacement-destination subframe number or slot number, a subframe number or a slot number corresponding to a slot including an SBFD symbol may be configured.

The replacement-destination subframe number or slot number may be predefined, or may be indicated (or configured) to terminal 200 by a configuration. The configuration may be configured, for example, in association with the symbol configuration of SBFD.

One or some of the replacement-destination subframe numbers or slot numbers may overlap with any of the subframe numbers or slot numbers included in the existing Random access configurations table (e.g., replacement-source subframe numbers or slot numbers).

Table 4 shows an example of a replacement of a subframe number according to Method 1-2.

**[Table 4]**

| Table 4 Example of replacement of subframe number according to Method 1-2 | | | | | | | | |
|---|---|---|---|---|---|---|---|---|
| **PRACH Configuration** Index | **Preamble format** | ***n*_{f} mod *x = y*** | | **Subframe number** | **Starting symbol** | **Number of PRACH** slots **within a subframe** | ${N}_{t}^{RA , slot}$ , **number of time-domain PRACH occasions within a PRACH slot** | ${N}_{dur}^{RA}$ , **PRACH duration** |
| | | *x* | *y* | | | | | |
| 192 | C2 | 2 | 1 | 9 → **7,8** | 2 | 1 | 2 | 6 |
| 193 | C2 | 2 | 1 | 8,9 → **7,8** | 2 | 2 | 2 | 6 |
| 194 | C2 | 2 | 1 | 7,9 → **7,8** | 2 | 1 | 2 | 6 |

As one example, Table 4 extracts indices 192, 193, and 194 from among a plurality of indices in the Random access configurations table shown in Table 6.3.3.2-3 of TS 38.211 (NPL 1). In the example of Table 4, the replacement-destination subframe number is set to "7, 8." Note that, in Method 1-2, the replacement-source subframe number need not be configured.

As shown in Table 4, regardless of the subframe number defined in the existing Random access configurations table, each subframe number after the replacement is set to "7, 8."

In this manner, in Method 1-2, by using the existing Random access configurations table for the configuration of PRACH resources in SBFD, PRACH resources suitable for a slot configuration or a symbol configuration of SBFD can be configured without adding a new table for SBFD.

Further, by the configuration of PRACH resources suitable for a slot configuration or a symbol configuration of SBFD, flexibility of PRACH resource configuration can be improved, and more PRACH resources can be arranged on an SBFD slot or an SBFD symbol, and therefore reduction of delay in RACH transmission, reduction of collision of PRACH transmission between terminals, and coverage improvement can be achieved.

Further, in Method 1-2, since replacement-source subframe numbers or slot numbers need not be configured, as compared with Method 1-1, signaling overhead can be reduced.

### <Method 2>

In Method 2, in determining the configuration of PRACH resources for SBFD-aware terminals, base station 100 reinterprets the existing Random access configurations table by adding (e.g., appending) another subframe number or another slot number in a configured number (or defined number) to a subframe number or a slot number included in the existing Random access configurations table.

The number of subframe numbers or slot numbers to be added may be predefined, or may be indicated (or configured) to terminal 200 by a configuration.

For example, as a subframe number or a slot number to be added, a number before or after the subframe number or the slot number defined in the Random access configurations table may be configured. Note that the position at which a subframe number or a slot number is added is not limited to before or after the existing subframe number or slot number.

Since SBFD can be used, for example, to improve UL delay or UL coverage, SBFD slots may be arranged in a larger number within one frame than UL slots. By adding the number of subframes or the number of slots according to Method 2, PRACH resource configuration suitable for a slot configuration for SBFD becomes possible.

Further, when a symbol type is changed in the time domain for transmission and reception, switching time between DL and UL may become overhead, and therefore, slots and symbols of SBFD are assumed to be arranged continuously to some extent. Therefore, in Method 2, it can be said that a method of adding continuous subframes or slots is effective. Note that the method of adding a subframe number or a slot number is not limited thereto, and may be a method of adding discontinuous subframes or slots.

Table 5 shows an example of a reinterpretation of a subframe number according to Method 2.

**[Table 5]**

| Table 5 Example of reinterpretation of subframe number according to Method 2 | | | | | | | | |
|---|---|---|---|---|---|---|---|---|
| **PRACH Configuration Index** | **Preamble format** | ***n*_{f} mod *x = y*** | | **Subframe number** | **Starting symbol** | **Number of PRACH slots within a subframe** | ${N}_{t}^{RA , slot}$ , **number of time-domain PRACH occasions within a PRACH slot** | ${N}_{dur}^{RA}$ , **PRACH duration** |
| | | *x* | *y* | | | | | |
| 192 | C2 | 2 | 1 | 9 → **8,9** | 2 | 1 | 2 | 6 |
| 193 | C2 | 2 | 1 | 8,9 → **7,8,9** | 2 | 2 | 2 | 6 |
| 194 | C2 | 2 | 1 | 7,9 → **6,7,8,9** | 2 | 1 | 2 | 6 |

As one example, Table 5 extracts indices 192, 193, and 194 from among a plurality of indices in the Random access configurations table shown in Table 6.3.3.2-3 of TS 38.211 (NPL 1). In Table 5, the number of subframes to be added is set to one. Further, in Table 5, a subframe number (subframe position) to be added is set to a subframe number before the subframe number defined in the existing Random access configurations table.

As shown in Table 5, in index 192, one subframe is added before the subframe number "9," and a subframe number after the reinterpretation is set to "8, 9." Further, in index 193, one subframe is added before each of the subframe numbers "8" and "9." However, since the subframe number "8" already exists and overlaps, in index 193, the subframe number after the reinterpretation is set to "7, 8, 9." Further, in index 194, one subframe is added before each of the subframe numbers "7" and "9," and the subframe number after the reinterpretation is set to "6, 7, 8, 9."

In this manner, in Method 2, by using the existing Random access configurations table for the configuration of PRACH resources in SBFD, PRACH resources suitable for a slot configuration or a symbol configuration of SBFD can be configured without adding a new table for SBFD.

Further, by the configuration of PRACH resources suitable for a slot configuration or a symbol configuration of SBFD, flexibility of PRACH resource configuration can be improved, and more PRACH resources can be arranged on an SBFD slot or an SBFD symbol, and therefore reduction of delay in RACH transmission, reduction of collision of PRACH transmission between terminals, and coverage improvement can be achieved.

Further, in Method 2, even when the PRACH configuration is performed by a configuration, it is sufficient that the number of subframes or the number of slots be indicated, and therefore signaling overhead can be reduced as compared with Method 1 (e.g., in the case where a plurality of subframe numbers or slot numbers are indicated when a plurality of subframe numbers or slot numbers are replaced).

### <Method 3>

In Method 3, in determining the configuration of PRACH resources for SBFD-aware terminals, base station 100 reinterprets the existing Random access configurations table by shifting a subframe number or a slot number included in the existing Random access configurations table and adding, to the shifted subframe number or slot number, another subframe or another slot in a configured number (or defined number).

As described above, a subframe number or a slot number defined in the existing Random access configurations table is defined, for example, on the assumption of the position of a UL symbol or a UL slot. In contrast, in Method 3, by applying shift of a subframe number or a slot number, PRACH resources can be more easily arranged on the SBFD slot while avoiding a UL slot.

In the following, an example of a method for shifting a subframe number or a slot number will be described. Note that base station 100 may, for example, apply the addition of a subframe or a slot in Method 2 after shifting the subframe number or the slot number.

### <Method 3-1>

In Method 3-1, base station 100 shifts a subframe number or a slot number based on a predefined shift amount (the number of subframes or the number of slots), or a shift amount (the number of subframes or the number of slots) indicated by a configuration. After shifting, base station 100 adds subframe numbers or slot numbers for a configured number of subframes or slots.

For example, when, due to the shift, a value falls below a minimum value (e.g., 0) of a subframe number or a slot number, or exceeds a maximum value (e.g., 9 for a subframe number and 39 for a slot number) of a subframe number or the number of slots, base station 100 may apply wraparound. For example, the following Equation 1 may be applied.
${s}_{n}^{′} = \left({s}_{n}+Δs\right) mod L$ (Equation 1)

Here, sₙ' represents a subframe number or a slot number after shift, sₙ represents a subframe number or a slot number defined in the Random access configurations table, Δs represents a shift amount (the number of subframes or the number of slots), and L represents the number of subframes within one frame (e.g., 10 subframes) or the number of slots within one frame in 60 kHz SCS (e.g., 40 slots). Base station 100 may, for example, apply the above shift to all subframe numbers or slot numbers defined in the Random access configurations table, or may apply the above shift to one or some of the subframe numbers or slot numbers.

Table 6 shows an example of a reinterpretation of a subframe number according to Method 3-1.

**[Table 6]**

| Table 6 Example of reinterpretation of subframe number according to Method 3-1 | | | | | | | | |
|---|---|---|---|---|---|---|---|---|
| **PRACH Configuration Index** | **Preamble format** | ***n*_{f} mod *x = y*** | | **Subframe number** | **Starting symbol** | **Number of PRACH slots** within a **subframe** | ${N}_{t}^{RA , slot}$ , **number of time-domain PRACH occasions within a PRACH** slot | ${N}_{dur}^{RA}$ , **PRACH duration** |
| | | *x* | *y* | | | | | |
| 192 | C2 | 2 | 1 | 9 → 8 → **7,8** | 2 | 1 | 2 | 6 |
| 193 | C2 | 2 | 1 | 8,9 → 7,8→ **6,7,8** | 2 | 2 | 2 | 6 |
| 194 | C2 | 2 | 1 | 7,9 → 6,8→ **5,6,7,8** | 2 | 1 | 2 | 6 |

As one example, Table 6 extracts indices 192, 193, and 194 from among a plurality of indices in the Random access configurations table shown in Table 6.3.3.2-3 of TS 38.211 (NPL 1). In Table 6, the shift amount (the number of subframes to be shifted) is set to one subframe, the shift direction is set to a forward direction (e.g., in Equation (1), Δs=9 in consideration of wraparound), and the number of subframes to be added is set to one.

As shown in Table 6, in index 192, the subframe number "9" is shifted by one in the forward direction to be a subframe number "8," and, by adding one subframe before the shifted subframe number "8," the subframe number after the reinterpretation is set to "7, 8." Further, in index 193, the subframe numbers "8" and "9" are each shifted by one in the forward direction to be subframe numbers "7, 8," and one subframe is added before each of the shifted subframe numbers "7, 8." However, since the subframe number "7" already exists and overlaps, in index 193, the subframe number after the reinterpretation is set to "6, 7, 8." Further, in index 194, the subframe numbers "7" and "9" are each shifted by one in the forward direction to be subframe numbers "6, 8," and, by adding one subframe before each of the shifted subframe numbers "6" and "8," the subframe number after the reinterpretation is set to "5, 6, 7, 8."

In this manner, in Method 3-1, by using the existing Random access configurations table for the configuration of PRACH resources in SBFD, PRACH resources suitable for a slot configuration or a symbol configuration of SBFD can be configured without adding a new table for SBFD.

Further, by the configuration of PRACH resources suitable for a slot configuration or a symbol configuration of SBFD, flexibility of PRACH resource configuration can be improved, and more PRACH resources can be arranged on an SBFD slot or an SBFD symbol, and therefore reduction of delay in RACH transmission, reduction of collision of PRACH transmission between terminals, and coverage improvement can be achieved.

Further, in Method 3-1, by applying shift of a subframe number or a slot number, PRACH resources can be configured while avoiding a UL slot, as compared with Method 2, and therefore configuration of PRACH resources more suitable for a slot configuration or a symbol configuration of SBFD becomes possible.

Note that the shift amount of a subframe number or a slot number may be a value configured for PRACH resources in SBFD, or may be configured (reused) using a value for another use.

### <Method 3-2>

In Method 3-2, base station 100 continues to perform shift until a subframe number or a slot number no longer collides with the original subframe number or slot number (e.g., a number defined in the existing Random access configurations table). This makes it possible to apply shift without definition of a shift amount and without indication of the shift amount.

Whether to apply the shift according to Method 3-2 may be, for example, predefined, or may be indicated (or configured) to terminal 200 by a configuration.

In Method 3-2, the shift processing according to the following procedures may be applied. After applying the shift processing, base station 100 adds subframe numbers or slot numbers for the configured number of subframes or slots.

### Procedure (1):

Base station 100 extracts a subframe number or a slot number defined in the Random access configurations table. The procedure proceeds to Procedure (2).

### Procedure (2):

Base station 100 shifts the extracted subframe number or slot number by one subframe or one slot (the shift direction is either forward or backward). The procedure proceeds to Procedure (3).

Note that, as the shifting method in Procedure (2), a shifting method similar to that of Method 3-1 may be applied. Further, the shift amount in Procedure (2) is not limited to one subframe or one slot.

### Procedure (3):

Base station 100 determines whether the subframe number or slot number shifted in Procedure (2) collides with (or overlaps with) any of the original subframe numbers or slot numbers (subframe numbers or slot numbers defined in the existing Random access configurations table). When no collision occurs, base station 100 uses the shifted subframe number or slot number, and ends the shift processing. When a collision occurs, the procedure proceeds to Procedure (4).

### Procedure (4):

Base station 100 determines whether the subframe numbers or slot numbers shifted in Procedure (2) are all the same as the original subframe numbers or slot numbers (e.g., subframe numbers or slot numbers defined in the Random access configurations table). When the subframe numbers or slot numbers are all the same, base station 100 uses the original subframe numbers or slot numbers as they are, and ends the shift processing. When the subframe numbers or slot numbers are different, the procedure proceeds to Procedure (2).

The exemplary procedures of the shift processing have been described above.

Table 7 shows an example of a reinterpretation of a subframe number according to Method 3-2.

**[Table 7]**

| Table 7 Example of reinterpretation of subframe number according to Method 3-2 | | | | | | | | |
|---|---|---|---|---|---|---|---|---|
| **PRACH Configuration Index** | **Preamble format** | ***n*_{f} mod *x* = *y*** | | **Subframe number** | **Starting symbol** | **Number of PRACH slots within a subframe** | ${N}_{t}^{RA , slot}$ , **number of time-domain PRACH occasions within a PRACH slot** | ${N}_{dur}^{RA}$ , **PRACH duration** |
| | | *x* | *y* | | | | | |
| 192 | C2 | 2 | 1 | 9 → 8 | 2 | 1 | 2 | 6 |
| 193 | C2 | 2 | 1 | 8,9 → 7,8→ 6,7 | 2 | 2 | 2 | 6 |
| 194 | C2 | 2 | 1 | 7,9 → 6,8 | 2 | 1 | 2 | 6 |
| 210 | C2 | 1 | 0 | 0,1,2,3,4,5,6,7,8,9 | 8 | 1 | 1 | 6 |

As one example, Table 7 extracts indices 192, 193, 194, and 210 from among a plurality of indices in the Random access configurations table shown in Table 6.3.3.2-3 of TS 38.211 (NPL 1). Further, in the example of Table 7, the number of subframes to be added is set to 0 (or the shift processing is omitted), and only a shift result is shown. Base station 100 may, for example, add a subframe number after the shift shown in Table 7.

As shown in Table 7, in indices 192 and 194, a subframe number is shifted by one subframe in the forward direction, and, since the shifted subframe number (e.g., "8" and "6, 8") is different from the original subframe number (e.g., "9" and "7, 9") (that is, no collision occurs), the subframe number after the reinterpretation is set to "8" and "6, 8," which are the results of shifting by one subframe.

Further, as shown in Table 7, in index 193, subframe numbers "8" and "9" are each shifted by one subframe in the forward direction, resulting in subframe numbers "7" and "8," respectively. Since the shifted subframe numbers "7, 8" are the same as the original subframe numbers ("8" of "8, 9") (that is, a collision occurs), the subframe numbers are further shifted by one subframe in the forward direction, resulting in subframe numbers "6, 7." Since the shifted subframe numbers "6, 7" are different from the original subframe numbers ("8, 9") (that is, no collision occurs), the subframe number after the reinterpretation is set to "6, 7," which are the results of shifting by two subframes.

Further, as shown in Table 7, in index 210, even when each subframe number is shifted by one subframe, a collision with the original subframe number always occurs, and, after shift is performed 10 times, the result matches the original subframe numbers (e.g., becomes "0, 1, 2, 3, 4, 5, 6, 7, 8, 9"), and therefore the subframe numbers after the reinterpretation are set to "0, 1, 2, 3, 4, 5, 6, 7, 8, 9," which are the original subframe numbers. Note that, in Table 7, the course of shifting for index 210 is omitted.

In this manner, in Method 3-2, by using the existing Random access configurations table for the configuration of PRACH resources in SBFD, PRACH resources suitable for a slot configuration or a symbol configuration of SBFD can be configured without adding a new table for SBFD.

Further, by the configuration of PRACH resources suitable for a slot configuration or a symbol configuration of SBFD, flexibility of PRACH resource configuration can be improved, and more PRACH resources can be arranged on an SBFD slot or an SBFD symbol, and therefore reduction of delay in RACH transmission, reduction of collision of PRACH transmission between terminals, and coverage improvement can be achieved.

Further, in Method 3-2, since the number of subframes or the number of slots to be shifted need not be indicated, signaling overhead can be reduced as compared with Method 3-1.

### <Method 4>

In Method 4, in determining the configuration of PRACH resources for SBFD-aware terminals, base station 100 changes (or switches) the position of a PRACH slot within a subframe from the existing slot position. For example, the position of a PRACH slot within a subframe is made different between the configuration of PRACH resources for SBFD-aware terminals and the configuration of PRACH resources for non-SBFD-aware terminals.

For example, in 30 kHz SCS of FR1, when "Number of PRACH slots within a subframe" is 1, in the existing specification, a PRACH slot is arranged in a second slot among two slots within a subframe. In the existing TDD slot configuration, a later slot among a plurality of slots is more likely to be configured as a UL slot. Thus, PRACH resources are more easily arranged by configuring a second slot within one subframe of 30 kHz SCS as a PRACH slot.

In contrast, an SBFD slot is possibly arranged before a UL slot, and cannot be configured as a UL slot. Thus, for example, there may be a case where PRACH resources are more easily arranged by configuring a first slot as a PRACH slot than by configuring a second slot as a PRACH slot within one subframe of 30 kHz SCS.

Thus, in Method 4, in the configuration of PRACH resources for SBFD-aware terminals, base station 100 switches a PRACH slot position within a subframe from a second position to a first position.

Note that, regarding application of switching of PRACH slot positions, for example, the switching may always be applied in the case of the configuration of PRACH resources for SBFD-aware terminals, or the switching may be applied according to the configuration setting. Configuring switching of PRACH slot positions by a configuration improves flexibility of PRACH resource configuration. On the other hand, always applying switching of PRACH slot positions can reduce signaling overhead.

Similarly, in 120 kHz SCS of FR2, when "Number of PRACH slots within a subframe" (the number of PRACH slots within 60 kHz slot) is 1, base station 100 may switch the position of a PRACH slot from a second slot to a first slot.

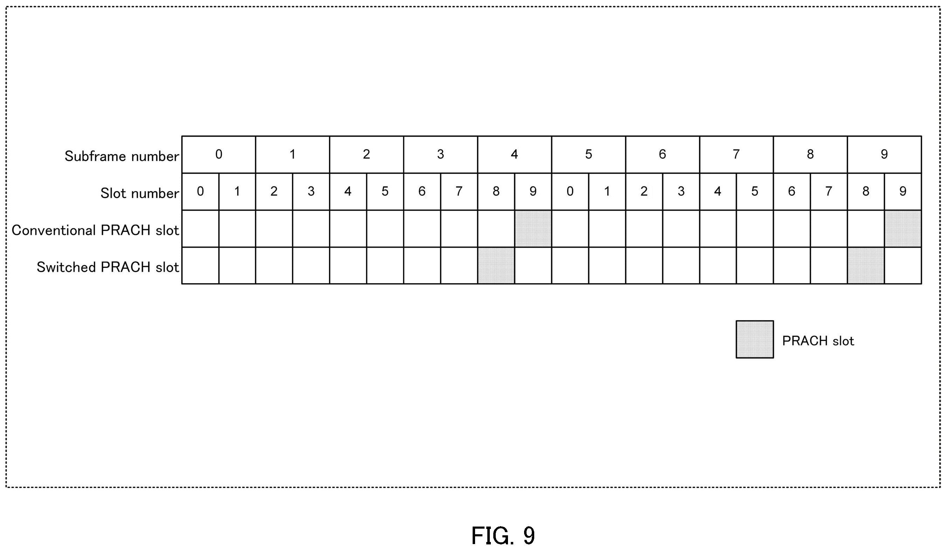

FIG. 9 illustrates an example of a comparison between the existing PRACH slot arrangement and the PRACH slot arrangement according to Method 4. In the example of FIG. 9, an example of 30 kHz SCS and PRACH configuration index 196 (subframe number = 4, 9) is illustrated. In FIG. 9, a correspondence relationship between subframe numbers and slot numbers is shown in the first row and the second row. As shown in FIG. 9, two slots are included in one subframe. Further, in FIG. 9, slot numbers are denoted by 0 to 9.

The third row in FIG. 9 indicates positions of PRACH slots based on the existing specification. In the existing specification, PRACH resources are arranged at positions of subframe numbers 4 and 9, and, as PRACH slots, are arranged in slot 9 (e.g., second slot in each subframe) in either subframe.

The fourth row in FIG. 9 indicates positions of PRACH slots according to Method 4. Unlike the existing specification, the PRACH slots are arranged in slot 8 (e.g., first slot of subframe numbers 4 and 9). For example, in the SBFD slot arrangement illustrated in FIG. 3, slot 8 is an SBFD slot, and slot 9 is a UL slot. That is, by applying Method 4, PRACH resources can be arranged in an SBFD slot.

As described above, in Method 4, by changing the position of a PRACH slot within a subframe, or a PRACH slot position in 60 kHz SCS, PRACH resources suitable for a slot configuration or a symbol configuration of SBFD can be configured in 30 kHz SCS in FR1 and 120 kHz SCS in FR2. By the configuration of PRACH resources suitable for a slot configuration or a symbol configuration of SBFD, flexibility of PRACH resource configuration can be improved, and more PRACH resources can be arranged on an SBFD slot or an SBFD symbol, and therefore reduction of delay in RACH transmission, reduction of collision of PRACH transmission between terminals, and coverage improvement can be achieved.

Note that the positions of a PRACH slot (positions before change and after change) is not limited to the second position and the first position, and may be another position.

The exemplary methods for configuring PRACH resources have been described above.

As described above, in the present embodiment, base station 100 and terminal 200 determine the configuration of PRACH resources in a time resource composed of SBFD symbols (e.g., SBFD slot or subframe), by reinterpreting information related to the configuration of PRACH resources in a time resource composed of non-SBFD symbols (e.g., existing Random access configurations table). This makes it possible, in the configuration of PRACH resources for SBFD, to appropriately configure PRACH resources on SBFD symbols using the existing Random access configurations table. Therefore, according to the present embodiment, the efficiency of PRACH resource configuration can be improved.

### (Other Embodiments)

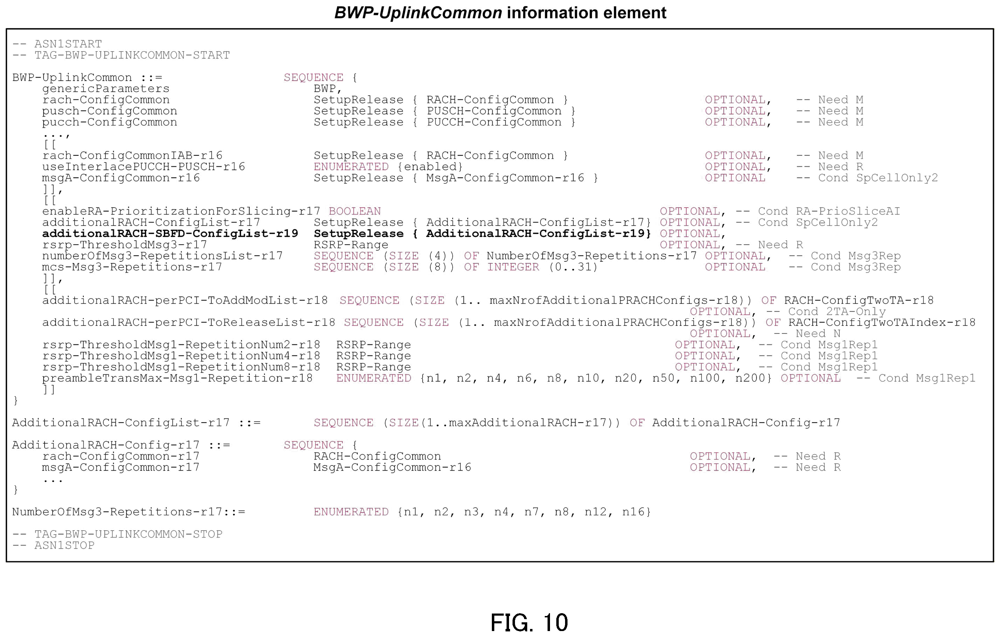

Note that, in one embodiment of the present disclosure, as a PRACH resource configuration for SBFD-aware terminals, for example, a configuration as illustrated in FIG. 10 may be assumed. In FIG. 10, "additionalRACH-SBFD-ConfigList-r19" is an example of the PRACH configuration for SBFD-aware terminals. For example, in FIG. 10, PRACH resources are configured for non-SBFD-aware terminals by "rach-ConfigCommon" or "additionalRACH-ConfigList-r17," and PRACH resources are configured for SBFD-aware terminals by "additionalRACH-SBFD-ConfigList-r19." The PRACH resource configuration for SBFD-aware terminals is realized by adding a different parameter for SBFD-aware terminals.

In one embodiment of the present disclosure, an operation of configuring PRACH resources for SBFD-aware terminals on UL symbols or Flexible symbols may be supported. When this operation is supported, by configuring PRACH resources used only by SBFD-aware terminals even on UL symbols or Flexible symbols, PRACH resources for SBFD-aware terminals can be increased, and flexibility of PRACH resource configuration can be improved. For example, when this operation is not supported, and PRACH resources for SBFD-aware terminals are configured on UL symbols or Flexible symbols, base station 100 and terminal 200 may determine that the PRACH resources are invalid (e.g., may determine that the PRACH resources are not Valid ROs). For example, by limiting PRACH resources for SBFD-aware terminals to SBFD symbols only, the configuration of PRACH resources can be separated between SBFD symbols and non-SBFD symbols, and the management and processing for PRACH transmission can be simplified. For example, by individually associating SSB and PRACH resources for PRACH resources on SBFD symbols and PRACH resources on non-SBFD symbols, the management and processing can be simplified.

Furthermore, in the above-described embodiments, the method for configuring time resources of PRACH has been described. For the configuration of frequency resources, the existing method may be employed. For example, in an SBFD symbol, the start position of PRACH resources in the frequency domain may be specified by a configuration.

In one embodiment of the present disclosure, when configured PRACH resources collide with DL symbols, as in the existing method, the configured PRACH resources may be determined to be invalid (e.g., may be determined not to be Valid ROs).

Further, in the above-described embodiments, a unit of time-domain resources is not limited to a symbol and a slot, and may be another time-domain resource, or may be another combination of time-domain resources.

Further, in the above-described embodiment, a case where SBFD is applied has been described, but one exemplary embodiment of the present disclosure may be applied without being limited to SBFD as long as the transmission direction (e.g., DL or UL) is configured for the plurality of bands (e.g., subbands) into which the frequency band is divided.

Further, in the above-described embodiment, values such as the number of subbands, the number of DL subbands, the number of UL subbands, the number of slots, the number of symbols, the subframe position, the slot position, and the shift amount are merely examples and are not limited. In addition, the subband configurations used in the embodiment described above are merely examples, and the number of subbands, the arrangement order of a DL subband and a UL subband are not limited thereto.

Further, in the above-described embodiment, the parameters (or combinations of parameters) shown in Tables 1 to 7, and configuration values (candidate values) of the respective parameters, are merely examples, and other combinations of parameters and other configuration values may be used. For example, the existing parameters are not limited to the parameters included in the Random access configurations table, and may be other parameters.

### (Supplementary Note)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, and processing described in the above embodiments.

Base station 100 may determine (or assume) the function, operation, or process supported (or not supported) by terminal 200 of the transmission source of the capability information, based on the capability information received from terminal 200, for example. Base station 100 may execute operations, processes, or control in accordance with a determination result based on the capability information. For example, base station 100 may control the resource configuration of a random access channel based on capability information received from terminal 200.

Note that the fact that terminal 200 does not support some of the functions, operations, or processes described in the above-described embodiments may be read as that some of the functions, operations, or processes are limited in terminal 200. For example, information or a request relating to such limitation may be indicated to base station 100.

The information related to the capability or the limitation of terminal 200 may be defined by standards or may be implicitly indicated to base station 100 in association with information known in base station 100 or information to be transmitted to base station 100, for example.

### (Control Signals)

In the present disclosure, the downlink control signal (or downlink control information) relating to one exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that indicated by the downlink control signal, but may be predefined in the specifications (or standard) or may be pre-configured for the base station and the terminal.

In the present disclosure, an uplink control signal (or uplink control information) relating to an exemplary embodiment of the present disclosure may be, for example, a signal (or information) transmitted through a PUCCH of the physical layer or a signal (or information) transmitted through the MAC CE or RRC of the higher layer. Further, the signal (or information) is not limited to that indicated by the uplink control signal, and may be predefined in the specifications (or standard) or may be pre-configured for the base station and the terminal. The uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in sidelink communication, a terminal may play a role of a base station. Furthermore, instead of the base station, a relay apparatus that relays communication between a higher node and a terminal may be used. Moreover, a road side device may be used.

### (Uplink/Downlink/Sidelink)

One exemplary embodiment of the present disclosure may be applied to, for example, any of an uplink, a downlink, and a sidelink. For example, one exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

Note that the PDCCH, PDSCH, PUSCH, and PUCCH are examples of a downlink control channel, a downlink data channel, an uplink data channel, and an uplink control channel, respectively. Further, PSCCH and PSSCH are examples of a sidelink control channel and a sidelink data channel, respectively. Further, PBCH and PSBCH are examples of broadcast channels, and PRACH is an example of a random access channel.

### (Data Channels/Control Channels)

One exemplary embodiment of the present disclosure may be applied to, for example, any of a data channel and a control channel. For example, a channel in an exemplary embodiment of the present disclosure may be replaced with any one of PDSCH, PUSCH, and PSSCH being the data channels, or PDCCH, PUCCH, PBCH, PSCCH, and PSBCH being the control channels.

### (Reference Signals)

In one exemplary embodiment of the present disclosure, a reference signal is a signal known to both of a base station and a mobile station, for example, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

One exemplary embodiment of the present disclosure may be applied to either a licensed band or an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). For example, a channel in an exemplary embodiment of the present disclosure may be replaced with any of PSCCH, PSSCH, Physical Sidelink Feedback Channel (PSFCH), PSBCH, PDCCH, PUCCH, PDSCH, PUSCH, and PBCH.

Further, one exemplary embodiment of the present disclosure may be applied to any of a terrestrial network or a network (Non-Terrestrial Network (NTN)) other than a terrestrial network using a satellite or a High Altitude Pseudo Satellite (HAPS). Further, one exemplary embodiment of the present disclosure may be applied to a network having a large cell size, and a terrestrial network with a large delay compared with a symbol length or a slot length, such as an ultra-wideband transmission network.

### (SBFD)

In one embodiment of the present disclosure, an operation for an uplink, downlink, or sidelink symbol may be applied to a symbol (e.g., SBFD symbol) in which an operation or control of SBFD (Subband non-overlapping full duplex, Subband full duplex) is performed. In an SBFD symbol, a frequency domain (or frequency resource, frequency band) is divided into a plurality of frequency domains (e.g., also referred to as subbands, RB sets, sub-bands, or sub-BWP (Bandwidth part)). A terminal performs transmission and reception in different directions (e.g., downlink or uplink) in units of subbands, which are divided domains. In an SBFD symbol, a terminal may perform transmission or reception in only one direction of uplink or downlink and need not perform transmission and reception in the other direction. In contrast, a base station may be capable of simultaneously transmitting and receiving uplink and downlink. An SBFD symbol may have a smaller frequency domain that can be used for downlink than a symbol that performs in which transmission and reception are performed only for downlink. Further, an SBFD symbol may have a small frequency domain that can be used for uplink, compared with a symbol in which transmission and reception are performed only for uplink.

Further, in an SBFD symbol, a terminal may simultaneously transmit and receive uplink and downlink. In that case, a frequency domain in which the terminal transmits and a frequency domain in which the terminal receives need not be adjacent and may have a frequency interval (also referred to as frequency gap) therebetween.

Further, as a different transmission and reception direction in units of subbands, which are divided domains, transmission and reception of sidelink may be included.

### (XDD: cross division duplex)

In one embodiment of the present disclosure, an operation for an uplink, downlink, or sidelink symbol may be applied to a symbol (e.g., full duplex symbol) in which an operation or control of full duplex is performed. In a full duplex symbol, both a terminal and a base station can simultaneously transmit and receive uplink and downlink. In a full duplex symbol, a terminal and a base station may simultaneously transmit and receive in an available frequency domain (or frequency resource, frequency band), or may simultaneously transmit and receive in a part of a frequency domain (that is, in another frequency domain, an operation of transmitting or receiving may be performed). In that case, a frequency domain in which the base station or the terminal transmits and a frequency domain in which the base station or the terminal receives need not be adjacent and may have a frequency interval (also referred to as frequency gap) therebetween. Further, for example, for the purpose of reducing interference, an operation in which either one of a terminal and a base station simultaneously transmits and receives may be performed (that is, the other may perform an operation of transmitting or receiving).

Further, the operation of full duplex may be applied to an operation in which the terminal can simultaneously transmit and receive sidelink. Further, an operation of full duplex may be applied to an operation in which the terminal can simultaneously transmit and receive sidelink and uplink or downlink.

### (Antenna Ports)

In one exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

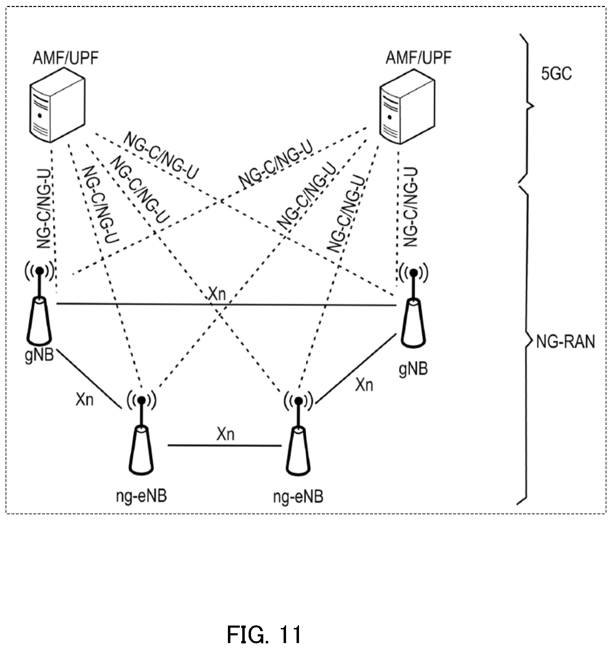

A 5G NR system architecture assumes, as a whole, a Next Generation - Radio Access Network (NG-RAN) including the gNB. The gNB provides the NG-radio access user plane (SDAP/PDCP/RLC/MAC/PHY) and control plane (RRC) protocol terminations towards the UE. The gNBs are interconnected with each other by means of an Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 11 (see e.g., 3GPP TS 38.300 v15.6.0, section 4).

### <RRC Connection Setup and Reconfiguration Procedure>

Interaction between UE, gNB, and AMF (5GC entity) in a NAS part when a UE transitions from RRC_IDLE to RRC_CONNECTED is shown (see TS 38.300 v15.6.0).

The RRC is higher layer signaling (protocol) used to configure the UE and gNB. The AMF prepares UE context data (which includes, e.g., PDU session context, security key, UE Radio Capability, UE security capabilities, and the like) and transmits the UE context data to the gNB together with an initial context setup request (INITIAL CONTEXT SETUP REQUEST). Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates to the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, in accordance with the PDU session, the NG-RAN establishes, for example, at least one Data Radio Bearers (DRB). Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

A base station (e.g., 5G NR base station referred to as gNB) described in each embodiment may be configured by three functional modules of Centralized Unit (CU), Distributed Unit (DU), and Radio Unit (RU).

The CU may be referred to as, for example, a centralized node, an aggregation node, a centralized station, an aggregation station, or a centralized unit. The DU may be referred to as, for example, an O-RAN Distributed Unit (O-DU), a distributed node, a distributed station, or a distributed unit. The RU may be referred to as, for example, an O-RAN Radio Unit (O-RU), a radio device, a radio node, a radio station, an antenna unit, or a radio unit.

For a functional split configuration (or functional split point) between a CU, a DU, and an RU, a plurality of split options are specified. The term "functional split point" may also be referred to as "split," "option," or "split option."

As an example of "split option," the following split options 1 to 8 may be exemplified. Functions of the base station described in each embodiment may be split into a CU, a DU, and an RU according to any of the following split options 1 to 8. For example, the functions may be split among the CU, the DU, and the RU, or may be split only between the CU and the DU or only between the DU and the RU.
(1) Split option 1: between radio resource control (RRC) and PDCP
(2) Split option 2: between PDCP and RLC (High-RLC)
(3) Split option 3: between High-RLC and Low-RLC
(4) Split option 4: between RLC (Low-RLC) and MAC (High-MAC)
(5) Split option 5: between High-MAC and Low-MAC
(6) Split option 6: between MAC (Low-MAC) and PHY (High-PHY)
(7) Split option 7: between High-PHY and Low-PHY
(8) Split option 8: between PHY (Low-PHY) and RF

A functional split point between a CU and an O-DU may be Split Option 2. The section between a CU and an O-DU is referred to as midhaul, and the F1 interface is specified by 3GPP. Further, the section between an O-DU and an O-RU is referred to as fronthaul, and its functional split point may be Split Option 7-2x adopted as the O-RAN fronthaul specification.

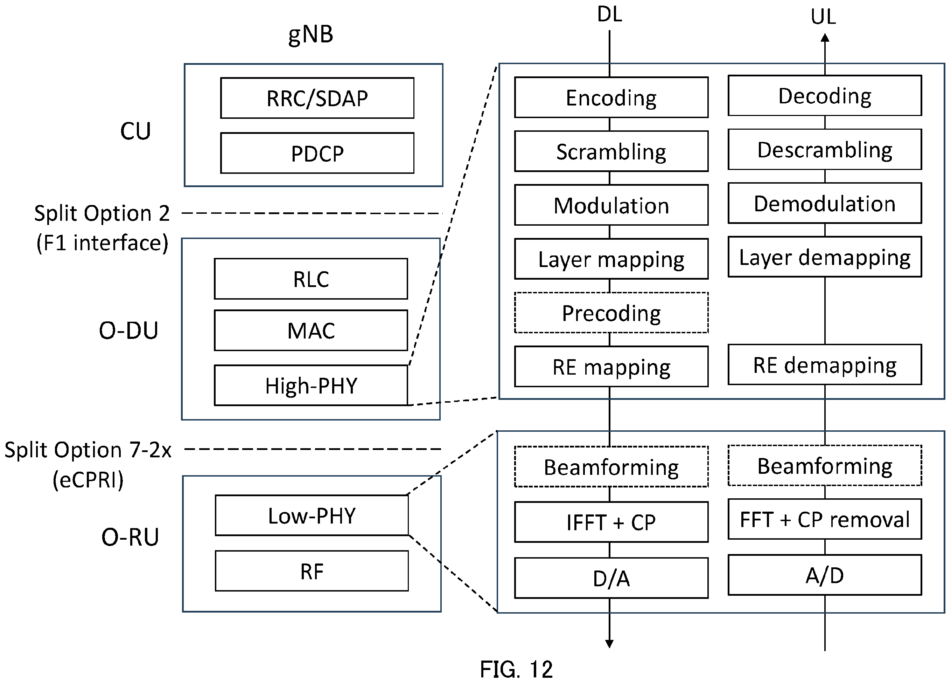

FIG. 12 illustrates an example in which the base station functions of gNB are functionally split into a CU, an O-DU, and an O-RU by Split Option 2 and Split Option 7-2x.

The CU may include, for example, a radio resource control (RRC) function, a service data adaptation protocol (SDAP) function, and a packet data convergence protocol (PDCP) function.

The O-DU may include, for example, a radio link control (RLC) function, a MAC function, and a higher physical layer (HIGH-PHY) function. Further, the HIGH-PHY function may include, for downlink (DL) transmission, an encoding function, a scrambling function, a modulation function, a layer mapping function, a precoding function, and a resource element (RE) mapping function. Further, the HIGH-PHY function may include, for uplink (UL) reception, a decoding function, a descrambling function, a demodulation function, a layer demapping function, and a resource element (RE) demapping function.

The O-RU may include, for example, a LOW-PHY function and an RF function. Further, the LOW-PHY function may include, for DL transmission, a beamforming function, an Inverse Fast Fourier Transform (IFFT) + Cyclic Prefix (CP) adding function, and a Digital to Analog (D/A) conversion function. Further, the LOW-PHY function may include, for UL reception, an Analog to Digital (A/D) conversion function, a CP removal + Fast Fourier Transform (FFT) function, and a beamforming function.

Note that, when the O-DU does not include a precoding function, the O-RU may include a precoding function.

The O-RU may have a function related to listen before Talk (LBT).

As a communication scheme between the O-DU and the O-RU in Split Option 7-2x, an Evolved Common Public Radio Interface (eCPRI) is specified.

In Split Option 7-2x, in eCPRI, in addition to a sampling sequence of in-phase (I) and quadrature (Q) components of an OFDM signal in the frequency domain, information used for beamforming in an antenna, a time synchronization signal, and the like are transmitted and received.

Information transmitted using signals (PDCCH, PUCCH, PDSCH, PUSCH, MAC CE, RRC, etc.) described in each embodiment may be transmitted between the O-DU and the O-RU via the User Plane (U-Plane) of eCPRI or the Control Plane (C-Plane).

In a case where a function described in each embodiment is executed in the O-RU due to functional split, the O-DU may control the O-RU by transmitting information for controlling the function by a control signal (e.g., eCPRI) between the O-DU and the O-RU.

In a case where a function described in each embodiment is executed in the O-DU due to functional split, the O-RU may receive, by a control signal (e.g., eCPRI), a result of executing the function in the O-DU, and may control the O-RU based on the received result.

The CU, the O-DU, and the O-RU may be deployed in physically different apparatuses in which respective functions are connected by optical fiber or the like, or some or all of the functions may be deployed in a physically same apparatus.

The CU and the O-DU may be logical entities implemented as software operating on a server such as a cloud as virtualized RAN (virtual Radio Access Network: vRAN). Further, some or all of functions of the CU and the O-DU may be provided as services of virtualized network functions (Network Functions Virtualization: NFV).

A transceiver need not be a radio transceiver, and may be, for example, a network transceiver, an optical transceiver, or the like. A radio resource allocated by the O-DU may be a resource for radio communication between the O-RU and a UE.

The present disclosure can be realized by software, hardware, or software in cooperation with hardware.

Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A base station according to an embodiment of the present disclosure includes: control circuitry, which, in operation, determines a first configuration of a resource of a random access channel in a first time resource having a frequency band divided into a plurality of bands, by reinterpreting information related to a second configuration of the resource of the random access channel in a second time resource different from the first time resource; and reception circuitry, which, in operation, receives a signal of the random access channel based on the first configuration.

In the embodiment of the present disclosure, the first time resource and the second time resource are subframes or slots, and the control circuitry, in determining the first configuration, replaces a subframe number or a slot number included in the information related to the second configuration with another number.

In the embodiment of the present disclosure, the control circuitry replaces one or some of a plurality of the subframe numbers or a plurality of the slot numbers included in the information related to the second configuration with another number.

In the embodiment of the present disclosure, the control circuitry replaces all of a plurality of the subframe numbers or a plurality of the slot numbers included in the information related to the second configuration with other numbers.

In the embodiment of the present disclosure, the first time resource and the second time resource are subframes or slots, and the control circuitry, in determining the first configuration, adds another number to a subframe number or a slot number included in the information related to the second configuration.

In the embodiment of the present disclosure, the first time resource and the second time resource are subframes or slots, and the control circuitry, in determining the first configuration, shifts a subframe number or a slot number included in the information related to the second configuration, and adds another number to the subframe number or the slot number after the shift.

In the embodiment of the present disclosure, the control circuitry performs the shift based on a predefined or indicated shift amount.

In the embodiment of the present disclosure, the control circuitry performs the shift until the subframe number or the slot number after the shift is different from the subframe number or the slot number included in the information related to the second configuration.

In the embodiment of the present disclosure, the information related to the second configuration includes a subframe number, and the control circuitry, in determining the first configuration, causes a slot position within a subframe corresponding to the subframe number to be different between the first time resource and the second time resource.

A terminal according to an embodiment of the present disclosure includes: control circuitry, which, in operation, determines a first configuration of a resource of a random access channel in a first time resource having a frequency band divided into a plurality of bands, by reinterpreting information related to a second configuration of the resource of the random access channel in a second time resource different from the first time resource; and transmission circuitry, which, in operation, transmits a signal of the random access channel based on the first configuration.

In a communication method according to an embodiment of the present disclosure, a base station determines a first configuration of a resource of a random access channel in a first time resource having a frequency band divided into a plurality of bands, by reinterpreting information related to a second configuration of the resource of the random access channel in a second time resource different from the first time resource, and receives a signal of the random access channel based on the first configuration.

In a communication method according to an embodiment of the present disclosure, a terminal determines a first configuration of a resource of a random access channel in a first time resource having a frequency band divided into a plurality of bands, by reinterpreting information related to a second configuration of the resource of the random access channel in a second time resource different from the first time resource, and transmits a signal of the random access channel based on the first configuration.

The disclosure of Japanese Patent Application No. 2024-013289, filed on January 31, 2024, including the specification, drawings, and abstract, is incorporated herein by reference in its entirety.

### Industrial applicability

An exemplary embodiment of the present disclosure is useful for radio communication systems.

### Reference Signs List

100 Base station
101, 201 Receiver
102, 202 Demapper
103, 203 Demodulator/Decoder
104 Preamble detector
105 Scheduler
106 RO controller
107, 206 Control information holder
108, 208 Data/Control information generator
109, 209 Encoder/Modulator
110, 210 Mapper
111, 211 Transmitter
200 Terminal
204 RO determiner
205 Controller
207 Preamble generator

## Claims

1. A base station, comprising:
control circuitry, which, in operation, determines a first configuration of a resource of a random access channel in a first time resource having a frequency band divided into a plurality of bands, by reinterpreting information related to a second configuration of the resource of the random access channel in a second time resource different from the first time resource; and
reception circuitry, which, in operation, receives a signal of the random access channel based on the first configuration.

2. The base station according to claim 1, wherein
the first time resource and the second time resource are subframes or slots, and
the control circuitry, in determining the first configuration, replaces a subframe number or a slot number included in the information related to the second configuration with another number.

3. The base station according to claim 2, wherein
the control circuitry replaces one or some of a plurality of the subframe numbers or a plurality of the slot numbers included in the information related to the second configuration with another number.

4. The base station according to claim 2, wherein
the control circuitry replaces all of a plurality of the subframe numbers or a plurality of the slot numbers included in the information related to the second configuration with other numbers.

5. The base station according to claim 1, wherein
the first time resource and the second time resource are subframes or slots, and
the control circuitry, in determining the first configuration, adds another number to a subframe number or a slot number included in the information related to the second configuration.

6. The base station according to claim 1, wherein
the first time resource and the second time resource are subframes or slots, and
the control circuitry, in determining the first configuration, shifts a subframe number or a slot number included in the information related to the second configuration, and adds another number to the subframe number or the slot number after the shift.

7. The base station according to claim 6, wherein
the control circuitry performs the shift based on a predefined or indicated shift amount.

8. The base station according to claim 6, wherein
the control circuitry performs the shift until the subframe number or the slot number after the shift is different from the subframe number or the slot number included in the information related to the second configuration.

9. The base station according to claim 1, wherein
the information related to the second configuration includes a subframe number, and
the control circuitry, in determining the first configuration, causes a slot position within a subframe corresponding to the subframe number to be different between the first time resource and the second time resource.

10. A terminal, comprising:
control circuitry, which, in operation, determines a first configuration of a resource of a random access channel in a first time resource having a frequency band divided into a plurality of bands, by reinterpreting information related to a second configuration of the resource of the random access channel in a second time resource different from the first time resource; and
transmission circuitry, which, in operation, transmits a signal of the random access channel based on the first configuration.

11. A communication method, comprising:
determining, by a base station, a first configuration of a resource of a random access channel in a first time resource having a frequency band divided into a plurality of bands, by reinterpreting information related to a second configuration of the resource of the random access channel in a second time resource different from the first time resource; and
receiving, by the base station, a signal of the random access channel based on the first configuration.

12. A communication method, comprising:
determining, by a terminal, a first configuration of a resource of a random access channel in a first time resource having a frequency band divided into a plurality of bands, by reinterpreting information related to a second configuration of the resource of the random access channel in a second time resource different from the first time resource; and
transmitting, by the terminal, a signal of the random access channel based on the first configuration.
